# EUROPÄISCHE PATENTANMELDUNG

(11) **EP 0 812 670 A1**
(43) Veröffentlichungstag der Anmeldung: **17.12.1997**
(21) Anmeldenummer: 97107762.3
(22) Anmeldetag: 13.05.1997
(51) Int. Cl.: B29C 47/00, B29C 47/34

(54) **Abzugsvorrichtung für im Blasverfahren hergestellte Kunstoffschlauchfolien**

(30) Priorität: 11.06.1996 DE 19623195
(71) Anmelder: HOSOKAWA ALPINE Aktiengesellschaft, D-86199 Augsburg (DE)
(72) Erfinder: Göllner, Manfred, Dipl.-Ing., 86399 Bobingen (DE); Dudek, Hubert, 50767 Köln (DE)

(57) **Zusammenfassung**

Die Erfindung betrifft eine Anlage zur Kunststoff-Schlauchfolienextrusion, insbesondere zur Extrusion von klebrigen Folien, mit einer reversierenden Abzugsvorrichtung zum wellenförmigen Verteilen von Dickenungleichheiten der Schlauchfolienbahn (1) mit einer im reversierenden Abzug fest angeordneten Wendestange (6,6') zur Umlenkung der Bewegungsrichtung der Schlauchfolienbahn um 90°, wobei ein Transportband (10,10') vorgesehen ist, das die Schlauchfolienbahn (1) trägt und um die Wendestange (6,6') führt, so daß eine Berührung der bewegten, klebrigen Folie (1) mit der feststehenden Wendestange (6,6') verhindert wird.

## Beschreibung

Die Erfindung betrifft eine Vorrichtung zum wellenförmigen Verteilen von in Herstellungsrichtung einer Folie verlaufenden Dickenungleichheiten über die Folienbreite im Zuge des Flachlegens einer kontinuierlich zugeführten, aufgeblasenen Schlauchfolie mit einem um die Schlauchachse reversierend schwenkbar angeordneten Drehtisch mit mindestens einer parallel zu den Abzugswalzen verlaufenden Lenkrolle, mit einem schräg zur Zuführungsrichtung der flachgelegten Schlauchfolienbahn angeordneten Umlenkkörper und einem die umgelenkte Schlauchfolienbahn aufnehmenden Führungsteil aus einer Anzahl parallel zur Achse der reversierenden Schwenkbewegung angeordneten Führungsrollen, sowie mit einer stationären Umlenkvorrichtung zur Umlenkung der Schlauchfolienbahn zu einer Wickelvorrichtung.

Solche reversierenden Abzugsvorrichtungen sind z.B. aus der DE-PS 17 04 689 bekannt und dienen zum gleichmäßigen Verteilen von Dickenungleichheilen der Schlauchfolie auf dem Folienwickel. Da auf Grund unvermeidlicher Einflüsse beim Herstellungsprozeß diese Dickenungleichheiten stets am gleichen Ort entstehen, würden sie sich bei noch so geringer Dickentoleranz beim Aufwickeln der Schlauchfolie auf den Folienwickel zu sichtbaren Wülsten, den sogenannten 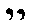 Kolbenringen 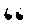 addieren. Solche Folienwickel sind jedoch für die weitere Verarbeitung, z.B. das Bedrucken, unbrauchbar. Um dies zu vermeiden werden die Dickstellen durch reversierende Abzüge wellenförmig in Herstellungsrichtung der Schlauchfolie über die Folienbreite verteilt, so daß beim Aufwickeln der Folie glatte, zylindrische Wickel entstehen.

Bei einer Abzugsvorrichtung nach dem genannten Stand der Technik wird die Bewegungsrichtung der extrudierten Schlauchfolie nach dem Passieren der Abquetschwalzen umgekehrt und anschließend die Schlauchfolie über eine 45°-Wendestange aus der vertikalen Ebene mit senkrechter Laufrichtung in eine vertikale Ebene mit horizontale Laufrichtung umgelenkt. In dieser Ausrichtung wird die Folie reversierend uni den Drehtisch, entlang der Führungsrollen geleitet, um danach mit Hilfe einer zweiten stationär angeordneten 45°-Wendestange von der horizontalen Laufrichtung in die vertikal nach unten führende Laufrichtung umgelenkt und dem Folienwickel zugeführt zu werden.

Die Wendestangen sind drehfest montiert, wobei die Schlauchfolie schleifend über die Wendestange gezogen wird. Eine rotierende Lagerung der Wendestangen ist nicht möglich, da hierbei die Folie durch das winkelige Zu- und Wegführen des Folienschlauches von der 45°-Wendestange ablaufen würde. Die Reibung zwischen Schlauchfolie und Wendestange ist bei üblichen Folienwerkstoffen wie z.B. HDPE, LDPE, PP, und PA gering, so daß ein schleifendes Abziehen der Schlauchfolie über die Wendestangen nur geringe Probleme bereitet. Bei der üblichen Bauweise mit perforierten Wendestangen werden diese von innen nach außen von Druckluft durchströmt, so daß sich zwischen Wendestange und Schlauchfolie ein Luftpolster aufbauen kann, das reibungsmindernd wirkt.

Andere Verhältnisse ergeben sich jedoch bei Verwendung von klebrigen Folien wie z.B. EVA mit hohem VA-Anteil (größer 20%). Diese Folien besitzen eine klebrige Außenschicht und können durch reversierende Abzugssysteme mit Wendestangen nach dem Stand der Technik nicht oder nur bedingt verarbeitet werden. Würde man eine solche Folie über die Wendestangen der bekannten reversierenden Abzüge führen, wären die Zugkräfte auf Grund der hohen Reibung zwischen Wendestange und Folie so groß, daß Folienabrisse die Folge wären. Die reversierenden Abzüge nach dem Stand der Technik sind somit nicht zur Herstellung von solchen Folien mit klebriger Oberfläche geeignet. Die gleichen Einschränkungen ergeben sich auch für Folien, die auf Grund anderer Oberflächeneigenschaften ( wie z.B. rauhe, strukturierte Oberfläche ) einen erhöhten Reibungsbeiwert aufweisen.

Der Erfindung liegt deshalb die Aufgabe zugrunde, eine reversierende Abzugsvorrichtung mit feststehenden 45°-Wendestangen nach dem Oberbegriff des Anspruchs 1 zu schaffen, durch die eine Verarbeitung von Folienschläuchen mit hohem Reibungsbeiwert an der Folienoberfläche, insbesondere von klebrigen Folien, möglich wird.

Erfindungsgemäß wird die Aufgabe dadurch gelöst, daß die Wendestange durch einen Umlenkkörper aus zwei parallel und mit Abstand zueinander verlaufenden Teilstücken ersetzt wird und daß ein endloses, mit der Abzugsgeschwindigkeit der Schlauchfolienbahn umlaufendes Transportband als Abstützvorrichtung für die flachgelegte Schlauchfolienbahn vorgesehen ist, das mindestens eine Lenkrolle und eine Führungsrolle über einen Teil ihres Umfangs umschlingt, wobei die Laufrichtung sowohl des vor- als auch des rücklaufenden Bandtrums durch jeweils ein Teilstück des Umlenkkörpers um 90° geändert wird.

Bei einer vorteilhaften Ausgestaltung besteht der Umlenkkörper aus zwei parallel zueinander und im Winkel von 45° zu den Achsen der Abzugswalzen angeordneten und im Querschnitt kreisförmigen Stangen. Jede Stange stellt somit eine Wendestange dar, wobei nur die erste Wendestange von dem Transportband mit der aufliegenden Folie umschlungen ist und die zweite Wendestange nur zum Zurückführen des Transportbandes ohne Folie dient.

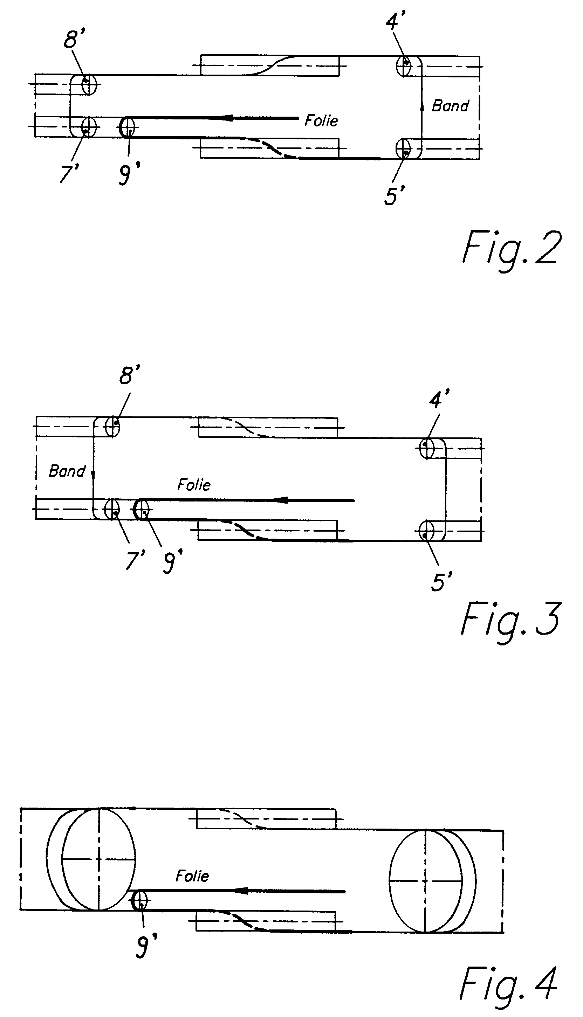

Uni einen störungsfreien Lauf des Transportbandes zu gewährleisten, erfolgt das Zurückführen des Transportbandes auf einer gleichförmigen Bahn wie im Bereich des geführten Transports der Folie. Dabei kann das Transportband durch verschiedene Umschlingungswege über die Wendestangen geführt werden. In den Figuren 2 bis 6 sind die verschiedenen Umschlingungswege schematisch dargestellt. Die Ansicht ist dabei senkrecht auf die beiden, parallel verlaufenden Wendestangen gerichtet, wobei ein Lenkrollen- und Führungsrollenpaare in schräger Draufsicht abgebildet werden. Dargestellt ist der Verlauf einer Kante des Transportbandes.

In einer weiteren Ausgestaltung können die Paare von Lenkrollen und Führungsrollen durch jeweils eine Rolle ersetzt werden. Um das Transportband auf den Rollen und Wendestangen spannen zu können, ist eine erste vom Transportband umschlungene Rolle parallel zu ihrer Achse und in Richtung der Achse der vom Transportband ebenfalls umschlungenen zweiten Rolle verstellbar ausgebildet.

Um die Geschwindigkeit des Transportbandes der Geschwindigkeit der abzuziehenden, flachgelegten Schlauchfolienbahn anpassen zu können, ist eine Rolle jeder Umlenkvorrichtung angetrieben. Der Antrieb erfolgt in vorteilhafter Weise durch einen elektromotorischen Antrieb. Dadurch wird die Folie durch einen ziehenden Antrieb aktiv über die Wendestangen gefördert. Dies reduziert zusätzlich die Spannungen in der abzuziehenden Schlauchfolienbahn.

Die Erfindung ist im folgenden an Hand der Zeichnungen näher erläutert.

Fig. 1 zeigt einen Gasamtverlauf der Folie in einer erfindungsgemäßen Abzugsvorrichtung mit der reversierenden und der stationären Umlenkvorrichtung von den Abquetschwalzen der Flachlegung bis zum Wickler.

Fig. 2 zeigt in der Ansicht X eine Variante für die Umschlingung der Weildestangen mit dem endlosen Transportband an der stationären Abzugsvorrichtung.

Fig. 3 zeigt in der selben Ansicht eine weitere Variante für die Umschlingung der Wendestangen mit dem endlosen Transportband an der stationären Abzugsvorrichtung.

Fig. 4 zeigt die Umschlingungsvariante nach Fig. 3, wobei die Paare von Lenkrollen und Führungsrollen durch jeweils eine Rolle ersetzt sind.

Fig. 5 zeigt die Umschlingungsvariante analog zu Fig. 2 für die reversierende Abzugsvorrichtung.

Fig. 6 zeigt die Umschlingungsvariante analog zu Fig. 3 für die reversierende Abzugsvorrichtung.

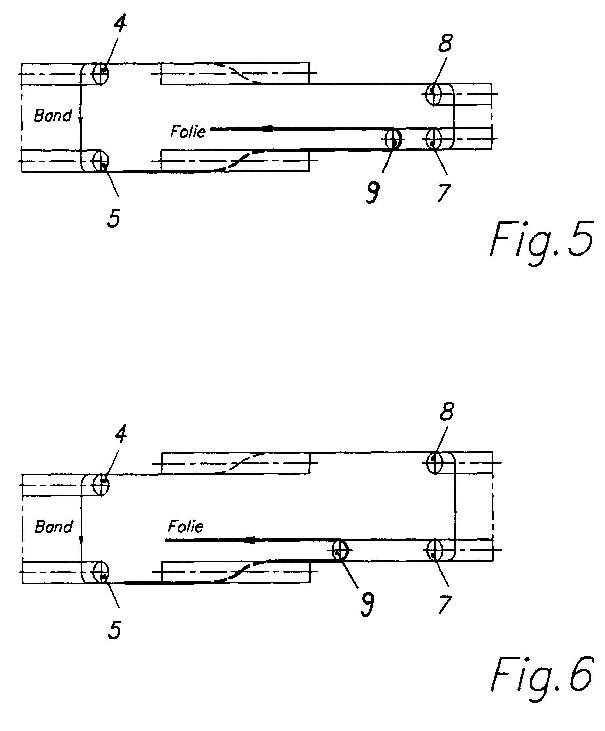

Für die Umschlingung der Wendestangen mit dem endlosen Transportband **10**,**10**' wird in den Varianten nach Fig. 2 und Fig. 5 ein endloses Transportband verwendet, das in sich nicht verwunden ist. In den Varianten nach Fig. 3, Fig. 4 und Fig. 6 ist ein endloses Transportband erforderlich, das in sich um 360° verwunden ist. Entscheidend für einen exakten Lauf ist, daß die sowohl vor- als auch die rücklaufenden Abschnitte des Transportbandes **10**,**10**' im Lenk- und Führungsrollenbereich zueinander parallel verlaufen. Dabei wird auch die erforderliche Umschlingung der Wendestangen um 180° gewährleistet.

Werden die Paare von Lenkrollen **4'**,**5'** sowie **4,5** und Führungsrollen **7',8'** sowie **7,8** durch jeweils eine Rolle ersetzt, so ist jede Einzelrolle in ihrem Durchmesser so groß zu dimensionieren, daß die vorstehend genannten Bedingungen weiterhin erfüllt werden. Eine beispielhafte Ausgestaltung mit Einzelrollen ist in Fig. 4 dargestellt.

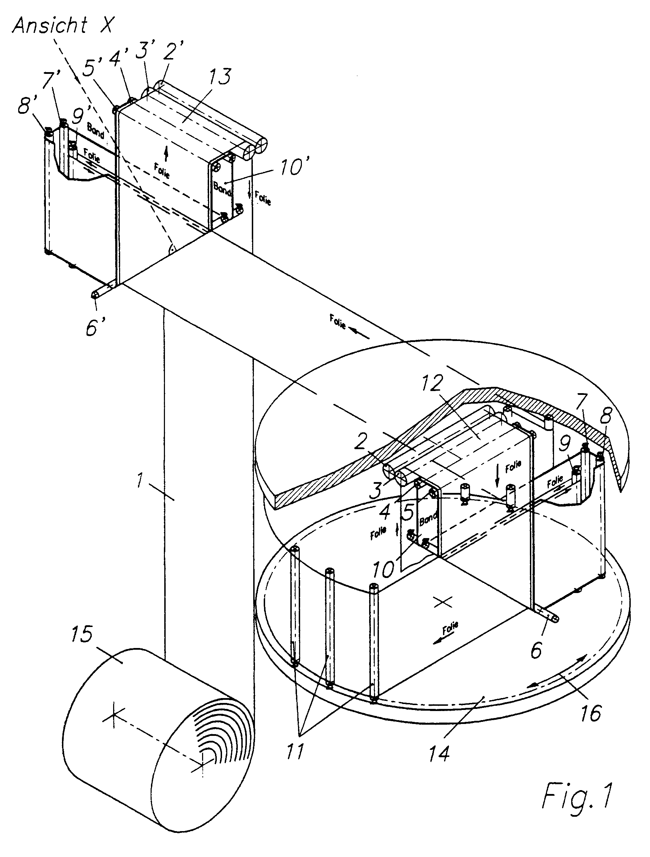

Jeder Umlenkkörper **6** oder **6** 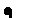 umfaßt bei der Konstruktion nach Fig. 1 zwei im Querschnitt kreisförmige Stangen, deren Achsen in einer Ebene liegen, die mit der Ebene durch die Achsen der Abzugswalzen **2** und **3** bzw. **2** 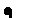 und **3** 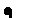 jeweils einen Winkel von 45° bilden. Eine Stange des Umlenkkörpers dient als Wendestange für die durch das Transportband **10** unterstützte Folie **1**. Die zweite Stange hat die Aufgabe das Transportband **10** auf einem gleich verlaufenden Weg zu den Lenkrollen **4** und **5** bzw. **4** 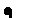 und **5** 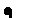 zurückzuführen.

Bei einer stationären Umlenkvorrichtung **13** nach Fig. 2 bis Fig. 4 wird die Folie **1** zwischen den beiden Wendestangen des Umlenkkörpers **6'** hindurch, der Auftragsrolle **9**' zugeführt. Die Folie **1** wird mit Hilfe der Auftragsrolle **9**' um 180° in ihrer Bewegungsrichtung geändert und auf das Transportband **10**' gelegt. Die innerhalb der Umlenkvorrichtung **13** aufgelegte Folie **1** wird auf dem Transportband **10**' haftend und zusammen mit diesem über die erste Wendestange des Umlenkkörpers **6**' geführt. Nach der Umlenkung um die Wendestange kommt die Folie **1** außerhalb der Umlenkvorrichtung **13** zu liegen und kann über die Lenkrollen **5**' und **4**' den Abzugswalzen **3**' und **2**' zugeführt werden, die die Umlenkung der Folie **1** zum Wickler **15** übernehmen. An der Lenkrolle **4**' wird die Folie **1** von dem Transportband **10**' abgezogen. Das Transportband **10**' wird auf einer gleichförmigen Bahn, wie über die erste Wendestange, über die zweite Wendestange des Umlenkkörpers **6**' zurückgeführt.

Der Folienverlauf an der reversierenden Umlenkvorrichtung **12** ist in Fig. 5 und Fig. 6 dargestellt. Die Anordnung nach Fig. 6 entspricht der Ausgestaltung wie sie in Fig. 1 dargestellt ist. Die Folie **1** wird nach den Abquetschwalzen **2** und **3** an der Lenkrolle **4** auf das Transportband **10** aufgelegt und durch die Lenkrolle **5** von außen der ersten Wendestange des Umlenkkörpers **6** zugeführt. Die von außen auf die Umlenkvorrichtung **12** aufgelegte Folie **1** wird auf dem Transportband **10** haftend und zusammen mit diesem über die erste Wendestange des Umlenkkörpers **6** geführt. Nach der Umlenkung um die Wendestange kommt die Folie **1** innerhalb der Umlenkvorrichtung **12** zu liegen und wird durch die Abzugsrolle **9** vom Transportband **10** abgezogen und die Bewegungsrichtung der Folie **1** umgekehrt. Die Folie **1** wird zwischen den beiden Wendestangen des Umlenkkörpers **6** hindurch und anschließend entlang der Führungsrollen **11** um den reversierenden Abzug **14** geführt.

In Fig. 1 ist eine erfindungsgemäße Abzugsvorrichtung dargestellt. Die Umlenkvorrichtungen - eine reversierende **12** und eine stationäre **13** - sind konstruktiv gleichartig ausgeführt und unterscheiden sich nur durch ihre jeweilige räumliche Anordnung und ihre Umschlingung durch das Transportband **10** und der Folie **1**. Jede Umlenkvorrichtung **12,13** besteht dabei aus einem Umlenkkörper **6,6** 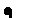 , der im Winkel von 45° zur Rotationsachse des reversierenden Abzugs **14** angeordnet ist, zwei Lenkrollen **4** und **5** bzw. **4** 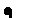 und **5** 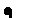 zur Lenkung der Folie **1** aus der horizontalen Ebene in die vertikale Ebene mit senkrechter Laufrichtung, auf dem Transportband **10**, sowie zwei Bandführungsrollen **7** und **8** bzw. **7** 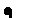 und **8** 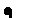 zur Rückführung des endlosen Transportbandes **10** und einer Abzugs- oder Auftragswalze **9**,**9** 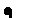 , um die Folie **1** vom Transportband **10** abziehen oder auflegen zu können.

Zunächst wird die aufgeblasene Schlauchfolie einer nicht dargestellten Flachlegevorrichtung zugeführt und dabei flachgelegt. Die Abzugswalzen **2** und **3**, bestehend aus einer angetriebenen und einer mitlaufenden Walze, fördern die Folie und lenken sie aus einer vertikalen Ebene mit senkrecht nach oben führenden Laufrichtung in eine horizontale Ebene mit horizontaler Laufrichtung. Die Folie wird in dieser Ausrichtung der Umlenkvorrichtung **12** zugeführt und im Bereich der Lenkrolle **4** auf das Transportband **10** aufgelegt. Die nun auf dem Transportband **10** haftende Folie **1** wird durch die Lenkrolle **5** in eine vertikale Ebene mit senkrecht nach unten führender Laufrichtung geführt und anschließend zusammen mit dem Transportband über den Umlenkkörper **6** gezogen.

Der Umlenkkörper **6** dient als Wendestange für die Folie **1**, wobei die Laufrichtung der Folie um 90° geändert wird. Dabei gleitet das Transportband **10** mit der Fördergeschwindigkeit der Folie **1** über die feststehende Wendestange. Die Reibung zwischen Umlenkkörper **6** und Transportband **10** ist dabei sehr gering, wogegen die klebrige Folie **1** mit hohem Reibungsbeiwert fest auf dem Transportband **10** haftet. Bei der Umlenkung um 90° wird die Folie **1** aus der vertikalen Ebene mit senkrechter Laufrichtung in eine vertikale Ebene mit horizontaler Laufrichtung gebracht.

In dieser Orientierung wird die Folie **1** mit dem Transportband **10** weitergeführt und im Bereich der drehbar gelagerten Abzugsrolle **9** durch diese von dem Transportband **10** abgezogen.

Die Folie läuft anschließend über mehrere am Umfang des reversierenden Abzugs **14** parallel zur Achse der reversierenden Schwenkbewegung angeordnete Führungsrollen **11**. Da sowohl die Abzugsrolle **9**, als auch die Führungsrollen **11** drehbar gelagert sind, kann die klebrige Folie **1** ohne größere Reibungsverluste direkt über die Rollen geführt werden. Die Folie **1** verläßt nach Ablaufen von der letzten Führungsrolle **11** den reversierenden Abzug **14** und wird anschließend der stationären Umlenkvorrichtung **13** zugeführt.

An der stationären Umlenkvorrichtung **13** wird die Folie **1** mit Hilfe der Auftragsrolle **9** 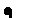 auf das Transportband **10** 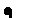 der stationären Umlenkvorrichtung **13** aufgelegt. Der Umlenkkörper **6** 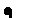 dient auch hier als Wendestange um die Laufrichtung der Folie **1** , die nun vom Transportband **10** 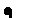 unterstützt wird, um 90° ändern zu können. Nachdem die Folie **1** aus der vertikalen Ebene mit horizontaler Laufrichtung in eine vertikale Ebene mit senkrechter Laufrichtung gebracht ist, wird die nach oben laufende Folie **1** um die Lenkrollen **4** 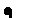 und **5** 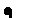 in die Horizontale geführt. Mit Hilfe der Abzugswalzen **3** 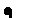 und **2** 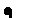 wird die Folie **1** vom Transportband **10** 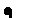 der stationären Umlenkvorrichtung **13** abgezogen und in die senkrecht nach unten laufende Richtung umgelenkt und dem Folienwickel **15** zugeführt.

### Bezugszeichen:

1 Folie
2,2 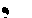 Abzugswalzen 1
3,3 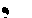 Abzugswalzen 2
4,4 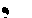 Lenkrollen 1
5,5 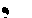 Lenkrollen 2
6.6 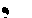 Umlenkkörper
7,7 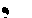 Führungsrollen 1
8,8 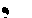 Führungsrollen 2
9 Abzugsrolle
9 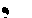 Auftragsrolle
10,10 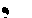 Transportbänder
11 Führungsrollen
12 Umlenkvorrichtung -reversierend-
13 Umlenkvorrichtung -stationär-
14 Reversierender Abzug
15 Folienwickel

## Patentansprüche

1. Vorrichtung zum wellenförmigen Verteilen von in Herstellungsrichtung einer Folie verlaufenden Dickenungleichheiten über die Folienbreite im Zuge des Flachlegens einer kontinuierlich zugeführten, aufgeblasenen Schlauchfolie mit einem um die Schlauchachse reversierend schwenkbar angeordneten Drehtisch mit mindestens einer parallel zu den Abzugswalzen verlaufenden Lenkrolle, mit einem schräg zur Zuführungsrichtung der flachgelegten Schlauchfolienbahn angeordneten Umlenkkörper und einem die umgelenkte Schlauchfolienbahn aufnehmenden Führungsteil aus einer Anzahl parallel zur Achse der reversierenden Schwenkbewegung angeordneten Führungsrollen, sowie mit einer stationären Umlenkvorrichtung zur Umlenkung der Schlauchfolienbahn zu einer Wickelvorrichtung, **dadurch gekennzeichnet, daß** der Umlenkkörper (6,6') aus zwei parallel und mit Abstand zueinander verlaufenden Teilstücken gebildet ist und daß ein endloses, mit der Abzugsgeschwindigkeit der Schlauchfolienbahn (1) umlaufendes Transportband (10,10') als Abstützvorrichtung für die flachgelegte Schlauchfolienbahn (1) vorgesehen ist, das mindestens eine Lenkrolle (4,4',5,5') und eine Führungsrolle (7,7',8,8') über einen Teil ihres Umfangs umschlingt, wobei die Laufrichtung sowohl des vor- als auch des rücklaufenden Bandtrums durch jeweils ein Teilstück des Umlenkkörpers (6,6') uni 90° geändert wird.

2. Vorrichtung nach Anspruch 1, dadurch gekennzeichnet, daß beide Teilstücke des Umlenkkörpers (6,6') als im Querschnitt kreisförmige Stangen ausgebildet sind, deren Achsen in einer Ebene liegen, die mit der Ebene durch die Achsen der Abzugswalzen (2,2',3,3') einen Winkel von 45° bildet.

3. Vorrichtung nach Anspruch 1 oder 2, dadurch gekennzeichnet, daß sowohl die vor-, als auch die rücklaufenden Abschnitte des Transportbandes (10,10') im Lenkrollenbereich (4,4',5,5') zueinander parallel verlaufen.

4. Vorrichtung nach Anspruch 1 bis 3, dadurch gekennzeichnet, daß sowohl die vor-, als auch die rücklaufenden Abschnitte des Transportbandes (10,10') im Führungsrollenbereich (7,7',8,8') zueinander parallel verlaufen.

5. Vorrichtung nach Anspruch 1 bis 4, dadurch gekennzeichnet, daß das Transportband (10,10') jedes Teilstück des Umlenkkörpers (6,6') um 180° umschlingt.

6. Vorrichtung nach Anspruch 1, dadurch gekennzeichnet, daß das eine Teilstück des Umlenkkörpers (6,6') als eine im Querschnitt kreisförmige Stange und das andere Teilstück als rinnenförmiges Rohrteil ausgebildet ist, das die Stange koaxial über einen Winkel von 180° umgibt und dessen Innendurchmesser um mehr als die zweifache Dicke des Transportbandes (10,10') größer ist als der Außendurchmesser der Stange.

7. Vorrichtung nach einem der Ansprüche 1 bis 6, dadurch gekennzeichnet, daß die vom Transportband (10,10') umschlungene Führungsrolle (7,7',8,8') parallel zu ihrer Achse und in Richtung der Achse der vom Transportband (10,10') ebenfalls umschlungenen Lenkrolle (4,4',5,5') verstellbar ist.

8. Vorrichtung nach einem der Ansprüche 1 bis 7, dadurch gekennzeichnet, daß die vom Transportband (10,10') umschlungene Lenkrolle (4,4',5,5') mit einer Antriebsvorrichtung gekoppelt ist.

9. Vorrichtung nach einem der Ansprüche 1 bis 7, dadurch gekennzeichnet, daß die vom Transportband (10,10') umschlungene Führungsrolle (7,7',8,8') mit einer Antriebsvorrichtung gekoppelt ist.
